# EUROPEAN PATENT APPLICATION

(11) **EP 4 046 963 A1**
(43) Date of publication of application: **24.08.2022**
(21) Application number: 20876530.5
(22) Date of filing: 15.10.2020
(51) Int. Cl.: C01F 7/36

(54) **BOEHMITE AND METHOD FOR PRODUCING SAME**

(30) Priority: 18.10.2019 JP 2019190811
(71) Applicant: SUMITOMO CHEMICAL COMPANY, LIMITED, Tokyo 103-6020 (JP)
(72) Inventor: KAJINO, Teppei, Niihama-shi, Ehime 792-8521 (JP); KAWAKAMI, Yoshitaka, Niihama-shi, Ehime 792-8521 (JP); SOGABE, Kohei, Niihama-shi, Ehime 792-8521 (JP)
(74) Representative: Vossius & Partner Patentanwälte Rechtsanwälte mbB
(86) International application number: PCT/JP2020/038915
(87) International publication number: WO 2021/075497

(57) **Abstract**

Disclosed is boehmite having a ratio of a micropore volume to a mesopore volume of 0.50 or more and a loose bulk density of 0.30 g/mL or more. The loose bulk density is preferably 0.70 g/mL or more.

## Description

### TECHNICAL FIELD

The present disclosure relates to boehmite and a method for producing the boehmite.

### BACKGROUND ART

Alumina (Al₂O₃) has excellent physical and chemical properties such as heat resistance, insulation properties, abrasion resistance, and corrosion resistance, and is therefore widely used in various applications. As a raw material of alumina, aluminum hydroxide, boehmite (alumina monohydroxide), and the like are known (Patent Documents 1 and 2).

Patent Document 1 discloses an aluminum hydroxide powder which has a small number of aggregated particles, can prevent re-aggregation of particles during pulverization, admixture of foreign matter, and impurity contamination, and can provide high purity alumina in which calcining efficiency is high and pulverization efficiency is not impaired. In the aluminum hydroxide described in Patent Document 1, a cumulative pore volume V in a range where a pore radius R is 0.01 µm or more and 1 µm or less is 0.2 mL/g or more and less than 1.0 mL/g, and a loose bulk density may be 0.30 g/mL or more and 0.60 g/mL or less.

Patent Document 2 discloses a method for preparing boehmite and γ-alumina with high surface area. Boehmite particles produced by the method described in Patent Document 2 have nanosize, high surface area, and high purity, and γ-alumina suitable for production of an adsorbent, a catalyst, a catalyst support, chromatography, and the like can be obtained by using the boehmite obtained.

### PRIOR ART DOCUMENTS

### PATENT DOCUMENTS

Patent Document 1: JP-A-2014-169208
Patent Document 2: JP-T-2008-534416

### SUMMARY OF THE INVENTION

### PROBLEMS TO BE SOLVED BY THE INVENTION

Alumina used for applications such as a catalyst for automobile exhaust gas and a stationary phase for gas chromatography is used under a high-temperature environment. Thus, it is required to have a high specific surface area not only at room temperature but also under a high-temperature environment. For the production of alumina having such characteristics, it is desirable to use a raw material having a high specific surface area even under a high-temperature environment.

However, the specific surface area of the aluminum hydroxide described in Patent Document 1 has not been studied, and although the surface area of the boehmite described in Patent Document 2 at room temperature has been studied, suppression of a decrease in the specific surface area when the boehmite is placed under a high-temperature environment has not been studied.

Thus, an object of the present disclosure is to provide, as a raw material for producing an alumina product having a high specific surface area even under a high-temperature environment, boehmite having a high specific surface area at room temperature and a low reduction rate of the specific surface area when placed under a high-temperature environment, and a method for producing the boehmite.

### SOLUTIONS TO THE PROBLEMS

An aspect 1 of the present invention provides boehmite having a ratio of a micropore volume to a mesopore volume of 0.50 or more and a loose bulk density of 0.30 g/mL or more.

An aspect 2 of the present invention provides the boehmite according to the aspect 1, wherein the loose bulk density is 0.70 g/mL or more.

An aspect 3 of the present invention provides boehmite according to the aspect 1 or 2 further comprising one or more selected from the group consisting of Ti, Si, Mg, and Zn,
wherein a total content of Ti, Si, Mg, and Zn is 0.1% by mass or more.

An aspect 4 of the present invention provides a method for producing boehmite, comprising a first hydrolysis step of adding a first hydrolysis liquid containing an aqueous alcohol solution having a water concentration of 5% by weight or more and 80% by weight or less to a solution containing aluminum alkoxide so that a molar ratio of water to aluminum alkoxide falls within a range of 1.5 or more and 2.0 or less to perform hydrolysis;
a second hydrolysis step of adding a second hydrolysis liquid containing water or an aqueous alcohol solution to the resulting solution so that the molar ratio of water to aluminum alkoxide falls within a range of 1.0 or more and 7.0 or less to perform hydrolysis;
a step of removing water and alcohol from the resulting solution to recover a boehmite powder; and
a step of stirring and drying the boehmite powder at a drying temperature of 80°C or higher and 110°C or lower while humidifying the boehmite powder so that a humidity is 80% or more and 100% or less,
wherein at least one of the first hydrolysis liquid and the second hydrolysis liquid contains 0.05 parts by weight or more and 10 parts by weight or less of an organic carboxylic acid with respect to the boehmite obtained after drying.

An aspect 5 of the present invention provides the method for producing boehmite, according to the aspect 4, wherein the first hydrolysis liquid contains the organic carboxylic acid, and
the organic carboxylic acid is acetic acid.

### EFFECTS OF THE INVENTION

According to the boehmite of the present disclosure, it is possible to provide boehmite having a high specific surface area at room temperature and a low reduction rate of the specific surface area when the boehmite is placed under a high-temperature environment. According to the production method of the present disclosure, the boehmite of the present disclosure can be efficiently produced.

### EMBODIMENT OF THE INVENTION

As a result of intensive studies, the present inventors have found that when boehmite contains micropores and a ratio of a micropore volume to a mesopore volume is 0.50 or more, boehmite having a high BET specific surface area before calcining and capable of suppressing a decrease in the BET specific surface area after calcining is obtained.

Hereinafter, boehmite and a method for producing boehmite according to an embodiment of the present invention will be described.

### <Embodiment 1>

The boehmite according to Embodiment 1 contains micropores and mesopores, and the ratio of the micropore volume to the mesopore volume is 0.50 or more.

When the boehmite contains the micropores, the BET specific surface area of the boehmite can be improved. When the ratio of the micropore volume to the mesopore volume is 0.50 or more, a decrease in the BET specific surface area can be suppressed even after the boehmite is calcined at a high temperature, whereby the boehmite having more excellent heat resistance performance can be obtained.

The ratio of the micropore volume to the mesopore volume is preferably 0.70 or more, and more preferably 0.77 or more.

In the present specification, the "micropores" are pores having a pore diameter of 2 nm or less, and the "mesopores" are pores having a pore diameter of more than 2 nm and 50 nm or less. The ratio of the micropore volume to the mesopore volume is calculated as "micropore volume (mL/g) ÷ mesopore volume (mL/g)". In the present specification, the ratio of the micropore volume to the mesopore volume may be referred to as a "micro-mesopore volume ratio".

In the present specification, the "micropore volume" means the volume of micropores contained per 1 g of boehmite, and the "mesopore volume" means the volume (mL) of mesopores contained per 1 g of boehmite.

The micropore volume and the mesopore volume are measured using a nitrogen gas adsorption method. First, boehmite to be measured is pretreated by vacuum degassing at 120°C for 8 hours, and then an adsorption/desorption isotherm with nitrogen is measured using a constant volume method. The measurement conditions are an adsorption temperature of 77 K, an adsorbent of nitrogen, an adsorbent cross-sectional area of 0.162 nm², and a waiting time after reaching an adsorption equilibrium state of 500 seconds.

In the measurement of the pore volume, some measurement methods can be used in combination according to the pore diameter. As an example, an MP method (for example, a measurement range is set to a pore radius of about 0.21 nm to about 1 nm) and a BJH method (for example, a measurement range is set to a pore radius of about 1 nm to about 100 nm) may be used in combination. From the results obtained by these measurement methods, a total value of the volume of pores having a pore diameter of 2 nm or less (pore radius of 1 nm or less) is determined and taken as the "micropore volume", and a total value of the volume of pores having a pore diameter of more than 2 nm and 50 nm or less (pore radius of more than 1 nm and 25 nm or less) is determined and taken as the "mesopore volume".

"rp,peak (Area)" refers to a peak of the pore radius in a pore distribution curve obtained using the BJH method, and a preferable range of the rp,peak (Area) is 0.01 nm or more and 3.50 nm or less, more preferably 0.01 nm or more and 2.50 nm or less, and still more preferably 0.01 nm or more and 1.5 nm or less. By adjusting the rp,peak (Area) of boehmite within the above range, the boehmite having a large number of micropores can be obtained, and the boehmite having further improved heat resistance can be obtained.

For pretreatment of boehmite for measurement, a commercially available pretreatment device (for example, BELPREP-vac2 manufactured by MicrotracBEL Corp.) can be used.

For the measurement of micropores and mesopores, a commercially available measuring apparatus (for example, BELSORP-miniII manufactured by MicrotracBEL Corp.) can be used. BELSORP-miniII can perform pore volume measurement by the MP method and the BJH method.

The micropore volume contained in boehmite is preferably 0.10 mL/g or more, because the BET specific surface area can be effectively improved. The micropore volume is more preferably 0.20 mL/g or more, and still more preferably 0.28 mL/g. The upper limit of the micropore volume is not particularly limited, and can be, for example, 2.00 mL/g or less.

The total volume of micropores and mesopores contained in boehmite is preferably 0.30 mL/g or more, more preferably 0.50 mL/g or more, still more preferably 0.60 mL/g, and even more preferably 0.65 mL/g. The upper limit of the total volume is not particularly limited, and can be, for example, 4.00 mL/g or less.

In addition, the boehmite according to Embodiment 1 has a loose bulk density of 0.30 g/mL or more. If the loose bulk density is 0.30 g/mL or more, which is bulky, for example, when boehmite is charged in a cell having a predetermined capacity used as a catalyst for automobile exhaust gas or a cell having a predetermined capacity used in a stationary phase for gas chromatography, it is possible to charge a larger amount of the boehmite as compared with boehmite having a low bulk density.

The loose bulk density is preferably 0.70 g/mL or more, and more preferably 0.78 g/mL or more. When the loose bulk density is within the above range, in the same manner as described above, not only an effect that a larger amount of boehmite can be charged in the cell having a certain capacity used as a catalyst for automobile exhaust gas or used in a stationary phase for gas chromatography can be obtained, but also an effect of improving separation performance of gas chromatography can be obtained.

Although the upper limit of the loose bulk density is not particularly limited, theoretically, the upper limit is about 3.98 g/cm³ of a theoretical density of alumina. However, since boehmite is in a powder form, a space between particles remains, and therefore, it is difficult to achieve a density as high as the theoretical density in practice. From a practical viewpoint, the loose bulk density may be, for example, 1.20 g/mL or less.

The boehmite according to Embodiment 1 preferably has a tapped bulk density of 0.40 g/mL or more. Even when the boehmite is used for a long time as a catalyst for automobile exhaust gas, a stationary phase for gas chromatography, or the like, a volume loss is small, and performance deterioration can be suppressed. The tapped bulk density is more preferably 0.60 g/mL or more, and particularly preferably 0.90 g/mL or more.

The upper limit of the tapped bulk density is not particularly limited, is theoretically about 3.98 g/cm³ or less, and may be, for example, 1.30 g/mL or less from a practical viewpoint.

The loose bulk density and the tapped bulk density are measured according to a method defined in JIS R 9301-2-3 (1999).

The "loose bulk density" is calculated by determining a mass of a sample collected by freely dropping a sample (boehmite powder) into a container (cylinder) having a known volume that is kept still while preventing vibration, and dividing the mass by a volume of an equal amount of water.

Regarding the "tapped bulk density", after the loose bulk density is measured, the cylinder containing the sample is dropped from a height of 3 cm 100 times to perform tapping (compression), a volume of the compressed sample is measured, and the mass is divided by the volume measured to calculate the tapped bulk density. The measurement is performed after confirming that the volume of the powder after compression is saturated during tapping 100 times.

The boehmite of the present disclosure may contain one or more elements of Ti, Si, Mg, and Zn in order to impart further properties in addition to the properties described above. The contents of these elements may be, for example, Ti of 0.1% by mass or more and 2.0% by mass or less, Si of 0.1% by mass or more and 2.0% by mass or less, Mg of 0.1% by mass or more and 2.0% by mass or less, and Zn of 0.1% by mass or more and 2.0% by mass or less, and a total amount thereof may be 0.1% by mass or more. A preferred content of each element will be described below.

Ti, Si, Mg, and Zn are all elements that impart an acid site to a surface of alumina. That is, when boehmite contains at least one element of Ti, Si, Mg, and Zn, alumina having the acid site on the surface can be produced. When such alumina is used as a catalyst for automobile exhaust gas, it is possible to impart such a characteristic that a sulfur component is easily adsorbed from a gas permeating a catalyst layer. In order to effectively exhibit the characteristics, the total content of Ti, Si, Mg, and Zn is preferably 0.1% by mass or more. The content of each element is preferably 0.1% by mass or more, more preferably 0.1% by mass or more and 2.0% by mass or less for each of Ti, Si, Mg, and Zn.

According to the boehmite of Embodiment 1, when the ratio of the micropore volume to the mesopore volume is 0.50 or more, not only the BET specific surface area can be improved, but also the decrease in the BET specific surface area can be suppressed even after the boehmite is calcined at a high temperature.

For example, the boehmite of Embodiment 1 can have a high initial BET specific surface area before calcining (referred to as "BET1") of 200 m²/g or more.

The boehmite of Embodiment 1 can exhibit a high value of 0.85 or more as a ratio (calculated by (BET3) ÷ (BET2)) of the BET specific surface area of the boehmite after calcining at 650°C (this BET specific surface area is referred to as "BET3") to the BET specific surface area of the boehmite after calcining at 450°C (this BET specific surface area is referred to as "BET2"). That is, even when a calcining temperature is increased from 450°C to 650°C, a reduction rate of the BET specific surface area can be kept as low as 0.15 (calculated by 1.00 - 0.85).

The BET specific surface area is determined by a nitrogen adsorption method in accordance with the method specified in JIS Z 8830 (2013).

### [Method for producing boehmite]

The method for producing the boehmite of Embodiment 1 is not particularly limited, and the following production method is preferably employed because the boehmite having the above-mentioned physical properties can be produced with good reproducibility.

A person skilled in the art who reads the present disclosure of the present application may arrive at a different method capable of producing the boehmite of Embodiment 1 based on these descriptions.

Hereinafter, a preferred method for producing the boehmite powder of Embodiment 1 will be exemplified.

The method for producing boehmite includes: adding an aqueous alcohol solution having a water concentration of 5% by weight or more and 80% by weight or less to a solution containing an aluminum alkoxide so that a water/aluminum alkoxide molar ratio is in a range of 2.5 or more and 7.0 or less to perform hydrolysis; removing water and alcohol from a mixed solution of hydrolysis to recover a boehmite powder; and stirring and drying the boehmite powder under humidification.

The inventors have newly found that, in a two-step hydrolysis, the bulk density of boehmite can be significantly increased by using a hydrolysis liquid containing an organic carboxylic acid in at least one of the first and second hydrolysis steps and then stirring and drying under humidification, and have completed the production method of the present disclosure.

Each step will be described in detail below.

### (1) Hydrolysis step

The hydrolysis of the aluminum alkoxide is carried out in two steps.

Specifically, the method includes a first hydrolysis step of adding a first hydrolysis liquid (aqueous alcohol solution) to a solution containing an aluminum alkoxide so that a molar ratio of water to the aluminum alkoxide falls within a range of 1.5 or more and 2.0 or less to perform hydrolysis, and a second hydrolysis step of adding a second hydrolysis liquid (water or aqueous alcohol solution) to the solution after the first hydrolysis step so that the molar ratio of water to the aluminum alkoxide is in a range of 1.0 or more and 7.0 or less to perform hydrolysis. Here, the "molar ratio of water to aluminum alkoxide" is a ratio of an amount (mol) of water contained in each hydrolysis liquid added in each hydrolysis step to an initial charged amount (mol) of the aluminum alkoxide.

Alcohol may be removed (recovered) between the first hydrolysis step and the second hydrolysis step.

After completion of the hydrolysis reaction, various physical properties such as a crystal structure of boehmite in the powder to be obtained depend on the molar ratio of aluminum alkoxide and water, and in addition, when a chemical modifier is contained, the physical properties also depend on the type and addition amount of the chemical modifier. The production method of the present disclosure is characterized in that hydrolysis is performed in two steps: in the first hydrolysis step, the first hydrolysis liquid in which the ratio of aluminum alkoxide and water is limited to a predetermined range is used to partially perform the hydrolysis reaction, and the hydrolysis reaction is further advanced in the second hydrolysis step to be performed after the first hydrolysis step, whereby a boehmite powder having desired characteristics can be produced.

A further feature of the production method of the present disclosure lies in the use of a hydrolysis liquid containing an organic carboxylic acid during hydrolysis. At least one of the first hydrolysis liquid used in the first hydrolysis step and the second hydrolysis liquid used in the second hydrolysis step contains 0.05 parts by weight or more and 10 parts by weight or less of an organic carboxylic acid with respect to boehmite obtained after stirring and drying.

As a result of intensive studies, the inventors have found that when hydrolysis is performed using a hydrolysis liquid containing an organic carboxylic acid, micropores having a pore volume in a specific range can be formed on a boehmite surface. In addition, the inventors have also found that there is an effect of increasing the micropore volume of boehmite by performing hydrolysis using a hydrolysis liquid containing an organic carboxylic acid and then stirring and drying under humidification.

The applicant has found that it is particularly preferable that the first hydrolysis liquid used in the first hydrolysis step contains an organic carboxylic acid in order to further exhibit those effects. For example, it has been confirmed that boehmite produced under a condition that only the first hydrolysis liquid contains an organic carboxylic acid has an improved BET specific surface area after calcining as compared with boehmite produced under a condition that only the second hydrolysis liquid contains an organic carboxylic acid. This is considered to be because the effect of the organic carboxylic acid on the hydrolysis reaction has become more remarkable by containing the organic carboxylic acid in the first hydrolysis liquid.

Both the first hydrolysis liquid and the second hydrolysis liquid may contain an organic carboxylic acid. In this case, the amount of the organic carboxylic acid added is controlled so that the total amount of the organic carboxylic acid contained in each of the first and second hydrolysis liquids is 0.05 parts by weight or more and 10 parts by weight or less with respect to boehmite obtained after stirring and drying.

As the organic carboxylic acid, for example, acetic acid is suitable.

### (1-i) Aluminum alkoxide

As the aluminum alkoxide as a raw material, aluminum ethoxide, aluminum n-propoxide, aluminum isopropoxide, aluminum n-butoxide, aluminum sec-butoxide, aluminum tert-butoxide, or the like can be used.

Among these, aluminum isopropoxide is suitable.

As long as physical properties of the obtained boehmite powder are not impaired, an aluminum alkoxide derivative obtained by chemical modification of the aluminum alkoxide, or a mixture of the derivative with the aluminum alkoxide may be used.

A solution containing an aluminum alkoxide may contain only an aluminum alkoxide, or may contain an alcohol for the purpose of enhancing miscibility with the aqueous alcohol solution to be added. The alcohol is preferably the same as the alcohol to be used in the first hydrolysis liquid described later.

When the solution containing the aluminum alkoxide contains an alcohol, a molar ratio of an alcohol to the aluminum alkoxide (molar amount of alcohol/molar amount of aluminum alkoxide) is not particularly limited as long as an adverse influence is not exerted on the hydrolysis reaction in the first hydrolysis step, and is usually 0 to 1.5. When the molar ratio is 0, it means that no alcohol is contained.

### (1-ii) First hydrolysis step

One of the features of the production method of the present disclosure is that the first hydrolysis liquid used in the first hydrolysis step is not water but an aqueous alcohol solution.

The water concentration in the aqueous alcohol solution is 5 to 80% by weight, preferably 5 to 50% by weight, and more preferably 5 to 30% by weight.

When the first hydrolysis liquid contains an organic carboxylic acid, 0.05 parts by weight or more and 10 parts by weight or less of the organic carboxylic acid with respect to boehmite to be obtained is added to an aqueous alcohol solution prepared to have a predetermined water concentration to prepare the first hydrolysis liquid.

When the water concentration in the aqueous alcohol solution of the first hydrolysis liquid is less than 5% by weight, water is insufficient, so that the hydrolysis reaction becomes insufficient. If the water concentration exceeds 80% by weight, the hydrolysis reaction proceeds before the aluminum alkoxide and water are sufficiently mixed, so that the hydrolysis becomes uneven. As a result, aggregated particles are likely to be generated in the calcined alumina powder, and pulverizability is impaired.

Use of an aqueous alcohol solution in the first hydrolysis liquid enables mild hydrolysis without causing rapid exothermic reaction by gradual progress of the hydrolysis reaction of aluminum alkoxide.

Examples of the alcohol used in the first and second hydrolysis liquids of the present disclosure include monohydric alcohols having 1 to 8 carbon atoms, and preferably monohydric alcohols having 1 to 4 carbon atoms. Specific examples thereof include alcohols represented by the following (Formula 1). Among these, isopropyl alcohol is particularly preferable. These alcohols may be used alone, or two or more kinds of them may be used in combination.

R₁OH (Formula 1)

where R₁ is at least one selected from the group consisting of: a methyl group, an ethyl group, a normal propyl group, an isopropyl group, a normal butyl group, an isobutyl group, a neobutyl group, a normal pentyl group, an isopentyl group, a neopentyl group, a normal hexyl group, an isohexyl group, a neohexyl group, a normal heptyl group, an isopentyl group, a neoheptyl group, a normal octyl group, an isooctyl group, and a neooctyl group; preferably a methyl group, an ethyl group, a normal propyl group, an isopropyl group, a normal butyl group, an isobutyl group, or a neobutyl group each having 1 to 4 carbon atoms; and more preferably an isopropyl group.

In the first hydrolysis step, the amount of the first hydrolysis liquid added is adjusted so that the molar ratio of water in the first hydrolysis liquid to aluminum alkoxide (molar amount of water/molar amount of aluminum alkoxide) is in a range of 1.5 to 2.0, preferably 1.6 to 1.8.

When the molar ratio of the aluminum alkoxide and water in the first hydrolysis step is less than 1.5, water is insufficient, and the hydrolysis reaction of the aluminum alkoxide becomes insufficient. If the molar ratio exceeds 2.0, the hydrolysis reaction of the aluminum alkoxide excessively proceeds, leading to excess hydrolysis before the second hydrolysis step. Thus, a boehmite powder having desired physical properties cannot be obtained.

As long as physical properties of the obtained boehmite powder are not impaired, surface charge controllers such as an acid and a base, dispersing agents, and surfactants such as an emulsifier can also be added to the first hydrolysis liquid.

There is no limitation on the hydrolysis reaction temperature in the first hydrolysis step since the solubility of the aluminum alkoxide in the alcohol varies depending on the kinds of the aluminum alkoxide and the alcohol to be used, and the hydrolysis reaction temperature is, for example, the room temperature or higher and the temperature which is a boiling point of a solvent or lower.

### (1-iii) Removal of alcohol

The solution obtained in the first hydrolysis step contains alcohol contained in the first hydrolysis liquid and alcohol generated by hydrolysis. Optionally, a step of removing (separating and recovering) alcohol from the solution may be performed. When the alcohol removing step is not performed, the first hydrolysis step is performed, and then the second hydrolysis step is performed.

A method of removing the alcohol is not particularly limited, and examples thereof include a method in which the solution after hydrolysis is passed through a column packed with an ion-exchange resin, and a method in which the alcohol is vaporized by heating the solution.

The amount of alcohol to be removed is arbitrary, and for example, 0% by weight or more and 50% by weight or less of alcohol can be removed when a total amount of alcohol contained in the solution is 100% by weight. "0% by weight" means that alcohol is not removed.

### (1-iv) Second hydrolysis step

In the second hydrolysis step, water or an aqueous alcohol solution can be used as the second hydrolysis liquid. The amount of the second hydrolysis liquid added is adjusted so that the molar ratio of water in the second hydrolysis liquid to aluminum alkoxide (molar amount of water/molar amount of aluminum alkoxide) is in a range of 1.0 to 7.0, preferably 1.5 to 6.5. The molar amount of the aluminum alkoxide in determining the molar ratio defined here is the molar amount of the aluminum alkoxide charged before the first hydrolysis step is performed.

By performing the second hydrolysis step after the first hydrolysis step, boehmite having desired physical properties is produced.

The second hydrolysis liquid may be water alone or an aqueous alcohol solution. The water concentration in the aqueous alcohol solution is not particularly limited as long as the contained alcohol does not adversely affect the hydrolysis reaction in the second hydrolysis step, and the water concentration is usually 5 to 100% by weight (0 to 95% by weight in terms of alcohol concentration).

When the second hydrolysis liquid contains an organic carboxylic acid, 0.05 parts by weight or more and 10 parts by weight or less of the organic carboxylic acid with respect to boehmite to be obtained is added to water or an aqueous alcohol solution prepared to have a predetermined water concentration to prepare the second hydrolysis liquid.

The concentration of water contained in a slurry after completion of the second hydrolysis step is preferably in a range of 10% by weight to 25% by weight when a total amount of the slurry is 100% by weight, and more preferably in a range of 12% by weight to 20% by weight particularly when the alcohol is isopropyl alcohol.

As long as the physical properties of the obtained boehmite powder are not impaired, surface charge controllers such as an acid and a base, dispersing agents, and surfactants such as an emulsifier can also be added to the second hydrolysis liquid.

There is also no limitation on the hydrolysis reaction temperature in the second hydrolysis step since the solubility of the aluminum alkoxide in the alcohol varies depending on the kinds of the aluminum alkoxide and the alcohol to be used, and the hydrolysis reaction temperature is usually the room temperature or higher and the temperature which is a boiling point of a solvent or lower.

A boehmite powder-containing mixed liquid obtained after completion of the second hydrolysis reaction may be subjected to aging treatment. The aging treatment is performed, for example, by leaving to stand at a temperature of room temperature or higher and hydrolysis temperature or lower for 30 minutes or more, usually 1 hour to 1 day.

### (2) Boehmite powder recovery step

From the solution obtained in the second hydrolysis step, acetic acid, water, and alcohol are removed to recover a boehmite powder.

The solution obtained after the second hydrolysis step (or after the aging treatment) contains the boehmite powder. From the mixed liquid containing the boehmite powder, acetic acid, water, and alcohol (unreacted alkoxide, if included) are removed to recover the boehmite powder. The boehmite powder can be obtained by treating the mixed liquid by a conventional method such as filtration and drying. A trace amount of water, a trace amount of alcohol, and/or a trace amount of acetic acid may remain in the obtained boehmite. Such trace amounts of water, alcohol, and acetic acid are presumed to be present in the mesopores, in the micropores, and between particles of boehmite.

### (3) Stirring and drying step under humidification (high bulk density treatment)

The resulting boehmite powder is charged into a stirring dryer, and stirred and dried while being humidified by spraying water. An amount of water sprayed is adjusted so that the humidity during stirring and drying is 80% or more and 100% or less. A drying temperature is 80°C or higher and 110°C or lower.

When this stirring and drying step is performed after the hydrolysis liquid containing an organic carboxylic acid is used in the hydrolysis step as described above, the bulk density of boehmite can be significantly increased. Thus, the stirring and drying treatment under humidification performed in the stirring and drying step may be referred to as "high bulk density treatment".

### (4) Final drying step

A final drying step may be performed after the high bulk density treatment. In the drying step, a certain amount of the resulting boehmite powder is charged into a metal tray or the like, and subjected to heat treatment in a stationary dryer. The drying temperature is 200°C to 400°C, and drying is performed for 4 hours or more. In particular, the drying temperature is preferably 250°C or higher.

By performing the final drying step, the mesopore volume and the micropore volume can be increased. The mechanism is not clear, but is presumed to be as follows.

Even after undergoing a boehmite powder recovery step and the stirring and drying step under humidification, water, alcohol, and acetic acid may be present in trace amounts in boehmite (for example, in mesopores and in micropores of boehmite). The final drying step makes it possible to increase the mesopore volume and the micropore volume by evaporating the water, alcohol, and acetic acid present in the mesopores and the micropores.

The water, alcohol, and acetic acid present in the micropores are difficult to evaporate, and may not be removed even when heated to their boiling points. In particular, water and acetic acid having a relatively high boiling point are less likely to evaporate than alcohols having a relatively low boiling point. The present inventors have found that drying at 250°C or higher for 4 hours or more is effective in order to reduce the amounts of water and acetic acid in the micropores and obtain the effect of further increasing the micropore volume. In particular, when drying at 300°C or higher for 4 hours or more is performed, an effect of removing water and acetic acid is high, and the micropore volume can be further increased.

According to the production method of the present disclosure, it is possible to produce boehmite having a ratio of the micropore volume to the mesopore volume of 0.50 or more and a loose bulk density of 0.30 g/mL or more. Boehmite having a loose bulk density improved to 0.70 g/mL or more can also be produced by producing the boehmite under the preferable conditions of the production method of the present disclosure.

### EXAMPLES

### [Example 1]

To aluminum isopropoxide heated and melted, 0.5 parts by weight of titanium isopropoxide was added in terms of titanium oxide, and the mixture was stirred for 1 hour. Next, water in an amount to be 1.7 in molar ratio with respect to aluminum isopropoxide and isopropyl alcohol in an amount to be isopropyl alcohol: water = 9 : 1 in weight ratio were mixed to prepare a mixed liquid (water concentration: 10% by weight) of isopropyl alcohol and water. Acetic acid in an amount of 3.7 parts by weight relative to the resulting boehmite was added to the mixed liquid, and the mixture was stirred to obtain the first hydrolysis liquid. The whole amount of the first hydrolysis liquid was added dropwise to aluminum isopropoxide added with titanium isopropoxide to perform the first hydrolysis step.

Next, the solution obtained in the first hydrolysis step was heated to recover about 60% by weight of isopropyl alcohol based on an amount of isopropyl alcohol contained. Thereafter, water in an amount such that the molar ratio with respect to aluminum isopropoxide was 1.7 was added as the second hydrolysis liquid to perform the second hydrolysis step, and thus to obtain a suspension (slurry) containing boehmite, water, acetic acid, and isopropyl alcohol. The obtained suspension was stirred and heated, and dried to obtain a boehmite powder.

While spraying 90 parts by weight of pure water for humidification to 100 parts by weight of the resulting boehmite powder, the mixture was stirred and dried at a humidity of 80% and a temperature of 80°C or higher and 110°C or lower to obtain a boehmite powder having an increased bulk density. The final drying step of drying the boehmite powder increased in bulk in a dryer at 220°C for 6 hours was performed to obtain a boehmite sample of Example 1. The boehmite sample contained Ti and was increased in bulk.

### [Example 2]

A powder was prepared in the same manner as in Example 1 except that the drying temperature in the final drying step was changed to 300°C, and a boehmite sample of Example 2 was obtained.

### [Example 3]

The final drying step was not performed, and instead, natural drying was performed by leaving to stand at room temperature for 1 hour. A powder was prepared in the same manner as in Example 1 except for the above, and a boehmite sample of Example 3 was obtained.

### [Comparative Example 1]

When the first hydrolysis liquid was prepared, acetic acid was not added to a mixed liquid of isopropyl alcohol and water, and the mixed liquid was used as it was as the first hydrolysis liquid. A powder was prepared in the same manner as in Example 1 except for the above, and a boehmite sample of Comparative Example 1 was obtained.

### [Comparative Example 2]

When the first hydrolysis liquid was prepared, acetic acid was not added to a mixed liquid of isopropyl alcohol and water, and the mixed liquid was used as it was as the first hydrolysis liquid. Bulking treatment and heat treatment were not performed. A powder was prepared in the same manner as in Example 1 except for the above, and a boehmite sample of Comparative Example 2 was obtained.

### [Comparative Example 3]

A powder was prepared in the same manner as in Example 1 except that the bulking treatment and the heat treatment were not performed, and a boehmite sample of Comparative Example 4 was obtained.

### [Comparative Example 4]

A sample was prepared according to the conditions of Example 3 of Patent Document 1 (JP-A-2014-169208). To a mixed liquid of 100.0 parts by weight of aluminum isopropoxide and 11.1 parts by weight of isopropyl alcohol, an aqueous alcohol solution containing 44.1 parts by weight of water and 11.0 parts by weight of isopropyl alcohol was added for hydrolysis. Next, isopropyl alcohol was separated and recovered by distillation, and then 19.0 parts by mass of water was further added for hydrolysis. The alcohol was recovered by distillation so that the concentration of the alcohol in the slurry after completion of the hydrolysis step was 24.5%. The obtained suspension was stirred and heated to be dried, and the resulting boehmite powder was used as a boehmite sample of Comparative Example 4.

The BET specific surface area, loose bulk density, tapped bulk density, micropore volume, and mesopore volume of each of the samples obtained in the above Examples and Comparative Examples were measured. Measurement conditions and the like in each measurement will be described below. The measurement results are shown in Table 1. The "rp,peak (Area)" in Table 1 refers to the peak of the pore radius in the pore distribution curve obtained using the BJH method. A t-method pore diameter (2t) is a pore diameter analyzed using a t-method.

### (BET specific surface area)

The BET specific surface area was determined by the nitrogen adsorption method in accordance with the method specified in JIS Z 8830 (2013).

"BET1" in Table 1 indicates the BET specific surface area of the sample before calcining (initial stage), "BET2" indicates the BET specific surface area of the sample after calcining the sample at 450°C for 60 minutes, and "BET3" indicates the BET specific surface area of the sample after calcining the sample at 650°C for 60 minutes. In each of the calcining at 450°C and the calcining at 650°C, the conditions were a rising and falling temperature of 200°C/hour, an air atmosphere, and a powder charged amount of 10 g.

A ratio of the BET specific surface area was determined by dividing BET3 by BET2 (that is, "BET3/BET2"). The reduction rate of the BET specific surface area was determined by subtracting the ratio of the BET specific surface area from 1.00 (that is, "1.00 - (BET3/BET2)").

In the present specification, a case where BET1 is 270 m²/g or more is evaluated as "good", a case where BET1 is 200 m²/g or more and less than 270 m²/g is evaluated as "acceptable", and a case where BET1 is less than 200 m²/g is evaluated as "not acceptable".

In the present specification, a case where the reduction rate of the BET specific surface area is 0.10 or less is evaluated as "good", a case where the reduction rate is more than 0.10 and 0.15 or less is evaluated as "acceptable", and a case where the reduction rate is more than 0.15 is evaluated as "not acceptable".

### (Loose bulk density, tapped bulk density)

The loose bulk density and the tapped bulk density were measured according to the method defined in JIS R 9301-2-3 (1999).

The loose bulk density of 0.30 g/mL or more is within the range of the present application, 0.70 g/mL or more is preferable, and 0.80 g/mL or more is particularly preferable. The loose bulk density of less than 0.30 g/mL is out of the range of the present application.

### (Micropore volume, mesopore volume)

Prior to the measurement of the micropore volume and the mesopore volume, the sample was placed in a pretreatment device (BELPREP-vac2 manufactured by MicrotracBEL Corp.), and pretreated under a condition of vacuum degassing at 120°C for 8 hours. Thereafter, the pore volume of the pretreated sample was measured using BELSORP-miniII manufactured by MicrotracBEL Corp. The pore volume was measured by the MP method (pore radius: about 0.21 nm to about 1 nm) and the BJH method (pore radius: about 1 nm to about 100 nm). From the results obtained by these measurement methods, the total value of the volume of pores having a pore diameter of 2 nm or less (pore radius of 1 nm or less) was determined and taken as the "micropore volume", and the total value of the volume of pores having a pore diameter of more than 2 nm and 50 nm or less (pore radius of more than 1 nm and 25 nm or less) was determined and taken as the "mesopore volume".

The micro-mesopore volume ratio (the ratio of the micropore volume to the mesopore volume) of 0.50 or more is within the range of the present application, 0.70 or more is preferable, and 0.77 or more is particularly preferable. The micro-mesopore volume ratio of less than 0.50 is out of the range of the present application.

**[Table 1]**

| | | | Example 1 | Example 2 | Example 3 | Comparative Example 1 | Comparative Example 2 | Comparative Example 3 | Comparative Example 4 |
|---|---|---|---|---|---|---|---|---|---|
| Addition of acetic acid | | | Addition (first hydrolysis liquid) | Addition (first hydrolysis liquid) | Addition (first hydrolysis liquid) | Not added | Not added | Addition (first hydrolysis liquid) | Not added |
| High bulk density treatment | | | Treated | Treated | Treated | Treated | Untreated | Untreated | Untreated |
| BET specific surface area | BET1 (initial) | m²/g | 275 | 271 | 286 | 196 | 308 | 413 | 267 |
| | BET2 (450°C) | m²/g | 220 | 256 | 267 | 180 | 304 | 361 | 256 |
| | BET3 (650°C) | m²/g | 188 | 246 | 233 | 150 | 252 | 288 | 206 |
| Ratio of BET specific surface area | BET3/BET2 | - | 0.85 | 0.96 | 0.87 | 0.83 | 0.83 | 0.80 | 0.80 |
| Reduction rate of BET specific surface area | 1.00-(BET3/BET2) | - | 0.15 | 0.04 | 0.13 | 0.17 | 0.17 | 0.20 | 0.20 |
| Loose bulk density | Initial | g/mL:10 mL | 0.73 | 0.80 | 0.77 | 0.74 | 0.17 | 0.20 | 0.43 |
| Tapped bulk density | Initial | g/mL:10 mL | 0.86 | 0.92 | 0.93 | 0.90 | 0.20 | 0.23 | 0.57 |
| Mesopore volume (N2) | | mL/g | 0.34 | 0.37 | 0.30 | 0.41 | 1.85 | 1.70 | 0.69 |
| rp,peak(Area) | | nm | 1.29 | 1.29 | 1.29 | 3.58 | 6.08 | 5.32 | 1.72 |
| Micropore volume | | mL/g | 0.26 | 0.29 | 0.26 | 0.00 | 0.00 | 0.00 | 0.00 |
| t-method pore diameter (2t) | | nm | 2.15 | 2.17 | 0.26 | 0.00 | 0.00 | 0.00 | 0.00 |
| Micro-mesopore volume ratio | | - | 0.76 | 0.78 | 0.87 | 0.00 | 0.00 | 0.00 | 0.00 |

The results in Table 1 are discussed below.

In the production of the boehmite samples of Examples 1 to 3, acetic acid was added to the first hydrolysis liquid, and the high bulk density treatment was performed. Thus, boehmite having a micro-mesopore volume ratio (the ratio of the micropore volume to the mesopore volume) of 0.70 or more and a loose bulk density of 0.70 g/mL or more was obtained. These boehmites not only had an initial BET specific surface area (BET1) of 270 m²/g or more before calcining, but also had a small reduction rate of the BET specific surface area of 0.15 or less. That is, it was found that the boehmites of Examples 1 to 3 could maintain a high BET specific surface area even at a high temperature, and had good heat resistance performance.

In particular, in Example 2, by setting the temperature of the final drying step to be as high as 300°C in addition to the acetic acid addition and the high bulk density treatment, boehmite having a micro-mesopore volume ratio of 0.77 or more and a loose bulk density of 0.80 g/mL or more was obtained. As a result, the BET specific surface area (BET1) was 270 m²/g or more, and the value of the reduction rate of the BET specific surface area was as extremely small as 0.10 or less. From this, it was found that the boehmite of Example 2 was particularly excellent in heat resistance performance.

In Comparative Example 1, acetic acid was not added to the hydrolysis liquid, and thus the micro-mesopore volume ratio was less than 0.50 even though the high bulk density treatment was performed. Thus, the reduction rate of the BET specific surface area exceeded 0.15, and the heat resistance performance was insufficient. The initial BET specific surface area (BET1) before the heat treatment was less than 200 m²/g.

In Comparative Example 2, acetic acid was not added to the hydrolysis liquid, and the high bulk density treatment was not performed, so that the micro-mesopore volume ratio was less than 0.50, and the loose bulk density was less than 0.30 g/mL. Thus, the reduction rate of the BET specific surface area exceeded 0.15, and the heat resistance performance was insufficient.

In Comparative Example 3, although acetic acid was added to the hydrolysis liquid, the high bulk density treatment was not performed, so that the micro-mesopore volume ratio was less than 0.50, and the loose bulk density was less than 0.30 g/mL. Thus, the reduction rate of the BET specific surface area exceeded 0.15, and the heat resistance performance was insufficient.

In Comparative Example 4, acetic acid was not added to the hydrolysis liquid, and the high bulk density treatment was not performed, so that the micro-mesopore volume ratio was less than 0.50. Thus, the reduction rate of the BET specific surface area exceeded 0.15, and the heat resistance performance was insufficient.

### INDUSTRIAL APPLICABILITY

The boehmite of the present disclosure can be used as a raw material for alumina products such as a catalyst for exhaust gas of a diesel engine and a catalyst for exhaust gas of a gasoline engine.

The present application claims priority based on Japanese Patent Application No. 2019-190811 filed on October 18, 2019. The disclosure of which is incorporated by reference herein.

## Claims

1. Boehmite having a ratio of a micropore volume to a mesopore volume of 0.50 or more and a loose bulk density of 0.30 g/mL or more.

2. The boehmite according to claim 1, wherein the loose bulk density is 0.70 g/mL or more.

3. The boehmite according to claim 1 or 2 further comprising one or more selected from the group consisting of Ti, Si, Mg, and Zn,
wherein a total content of Ti, Si, Mg, and Zn is 0.1% by mass or more.

4. A method for producing boehmite, comprising:
a first hydrolysis step of adding a first hydrolysis liquid containing an aqueous alcohol solution having a water concentration of 5% by weight or more and 80% by weight or less to a solution containing aluminum alkoxide so that a molar ratio of water to aluminum alkoxide falls within a range of 1.5 or more and 2.0 or less to perform hydrolysis;
a second hydrolysis step of adding a second hydrolysis liquid containing water or an aqueous alcohol solution to the resulting solution so that the molar ratio of water to aluminum alkoxide falls within a range of 1.0 or more and 7.0 or less to perform hydrolysis;
a step of removing water and alcohol from the resulting solution to recover a boehmite powder; and
a step of stirring and drying the boehmite powder at a drying temperature of 80°C or higher and 110°C or lower while humidifying the boehmite powder so that a humidity is 80% or more and 100% or less,
wherein at least one of the first hydrolysis liquid and the second hydrolysis liquid contains 0.05 parts by weight or more and 10 parts by weight or less of an organic carboxylic acid with respect to the boehmite obtained after drying.

5. The method for producing boehmite, according to claim 4, wherein the first hydrolysis liquid contains the organic carboxylic acid, and
the organic carboxylic acid is acetic acid.
